# EUROPÄISCHE PATENTANMELDUNG

(11) **EP 1 840 684 A1**
(43) Veröffentlichungstag der Anmeldung: **03.10.2007**
(21) Anmeldenummer: 06006261.9
(22) Anmeldetag: 27.03.2006
(51) Int. Cl.: G05B 19/05, G05B 19/418

(54) **Automatisierungsgerät sowie-system, enthält Automatisierungskomponenten die per lösbaren Funkmodulen drahtlos kommunizieren können**

(71) Anmelder: SIEMENS AKTIENGESELLSCHAFT, 80333 München (DE)
(72) Erfinder: Donderer, Markus, 92224 Amberg (DE)

(57) **Zusammenfassung**

Ein Automatisierungsgerät (3, 4) mit einer Anzahl von abgesetzten Peripherieeinheiten (3.4, 3.5, 4.4, 4.5), wie I/O-Modulen oder dergleichen, von denen zumindest eine Peripherieeinheit drahtlos für einen Datenaustausch mit einem Schnittstellenmodul (3.3, 4.3) des Automatisierungsgeräts (3, 4) verbunden ist, zeichnet sich dadurch aus, dass zumindest die eine Peripherieeinheit (3.4, 3.5, 4.4, 4.5) für den Datenaustausch mit dem Schnittstellenmodul (3.3, 4.3) ein extern bezüglich der einen Peripherieeinheit angeordnetes erstes externes Funkmodul (3.8, 3.9, 4.8, 4.9) aufweist.

## Beschreibung

Die vorliegende Erfindung betrifft ein Automatisierungsgerät gemäß dem Oberbegriff des Patentanspruchs 1 mit einer Anzahl von abgesetzten Peripherieeinheiten, wie I/O-Modulen oder dergleichen, von denen zumindest eine Peripherieeinheit drahtlos für einen Datenaustausch mit einem Schnittstellenmodul des Automatisierungsgeräts verbunden ist.

Weiterhin betrifft die vorliegende Erfindung ein externes Funkmodul gemäß Patentanspruch 8 für ein Automatisierungsgerät mit einer Anzahl von abgesetzten Peripherieeinheiten, wie I/O-Modulen oder dergleichen, von denen zumindest eine Peripherieeinheit drahtlos für einen Datenaustausch mit einem Schnittstellenmodul des Automatisierungsgeräts verbunden ist.

Darüber hinaus betrifft die vorliegende Erfindung ein Automatisierungssystem gemäß dem Oberbegriff des Patentanspruchs 11, aufweisend ein Bussystem und eine Anzahl von an das Bussystem angeschlossenen Automatisierungsgeräten, wobei wenigstens ein Automatisierungsgerät eine Anzahl von abgesetzten Peripherieeinheiten besitzt, wie I/O-Modulen oder dergleichen, von denen zumindest eine Peripherieeinheit drahtlos für einen Datenaustausch mit einem Schnittstellenmodul des Automatisierungsgeräts verbunden ist.

Automatisierungsgeräte der eingangs genannten Art werden heutzutage vielfach in Form einer modularen, dezentralen Peripherie zur Steuerung von Maschinen, insbesondere in einer Ausgestaltung als speicherprogrammierbare Steuerung (SPS), für vielfältige Anwendungen eingesetzt. Grundsätzlich setzen sich derartige Automatisierungsgeräte aus einer Anzahl von Peripheriemodulen oder Peripherieeinheiten zusammen, die untereinander zu Datenübertragungszwecken verbunden sind, wobei die einzelnen Peripheriemodule ihrerseits mit Funktionseinheiten einer zu steuernden Maschine in signaltechnischer Wirkverbindung stehen. Dabei besitzen die Peripheriemodule in der Regel keine Vor-Ort-Intelligenz, sondern sind als so genannte Slaves zum Sammeln und Übertragen von steuerungsrelevanten Daten zwischen einer zu steuernden Maschine und einer mit dem Bussystem in signaltechnischer Wirkverbindung stehenden übergeordneten Steuereinrichtung, beispielsweise in Form eines Automatisierungs-Controllers (CPU), verbunden.

Um möglichst tief beziehungsweise fein verteilt in eine zu steuernde Maschine eindringen zu können - sofern dies anwendungsspezifisch erforderlich ist -, besitzen Automatisierungsgeräte der eingangs genannten Art regelmäßig eine Anzahl von Peripheriemodulen, wie Actor-Sensor-Interface-Modulen (ASI-Modulen) und/oder Input/Output-Modulen (I/O-Modulen), die von einem Rest des Automatisierungsgeräts abgesetzt, das heißt räumlich und baulich getrennt, angeordnet sind, wobei die abgesetzten Peripherieeinheiten (abgesetzten Peripheriemodule) zu Kommunikationszwecken über einen unterlagerten Bus mit einem bestimmten, ausgezeichneten Peripheriemodul des restlichen Automatisierungsgeräts verbunden sind.

Das ausgezeichnete Peripheriemodul wird dabei regelmäßig und im Folgenden als Gateway oder Bridge beziehungsweise Gateway-Peripheriemodul bezeichnet. Des Weiteren werden regelmäßig und im Folgenden mehrere, an ein gemeinsames Bussystem angebundene Automatisierungsgeräte, die zur Steuerung einer gemeinsamen oder unterschiedlicher Maschinen vorgesehen und ausgebildet sein können, als Automatisierungssystem bezeichnet, wobei das Automatisierungssystem neben den Automatisierungsgeräten auch das Bussystem sowie gegebenenfalls eine übergeordnete Steuerungseinrichtung (CPU) mit umfasst.

Aus dem Stand der Technik sind zunächst kabelgebundene Automatisierungsgeräte beziehungsweise Automatisierungssysteme bekannt, bei denen die abgesetzten Peripherieeinheiten über kabelgebundene Kommunikationsanbindungen an das Gateway-Peripheriemodul angeschlossen sind. Derartige Automatisierungsgeräte beziehungsweise Automatisierungssysteme erfordern in nachteiliger Weise einen hohen Verkabelungsaufwand, der die Flexibilität der Anordnung beschränkt und darüber hinaus mit entsprechenden Kostennachteilen verbunden ist. Des Weiteren unterliegen Verbindungskabel, insbesondere wenn sie als Schleppkabel ausgebildet sind, einem relativ hohem Verschleiß. Sofern Schleifringe verwendet werden, wirkt sich dies ebenfalls nachteilig auf die Kosten aus.

Weiterhin sind aus dem Stand der Technik drahtlose Kommunikationsanbindungen der abgesetzten Peripherieeinheiten an das Gateway- oder Schnittstellenmodul bekannt, bei denen in die abgesetzten Peripherieeinheiten sowie in das Schnittstellenmodul jeweils ein Sender und ein Empfänger integriert ist. Bei einer solchen Lösung ist insbesondere als nachteilig anzusehen, dass je nach Typ eines einzusetzenden Peripheriemoduls und je nach Art der drahtlosen Kommunikationsanbindung, eine große Anzahl verschiedener Typen von Peripheriemodulen mit integrierten Funkgeräten für die drahtlose Anbindung existieren, was entsprechende Kostennachteile bei der Herstellung, beim Vertrieb und bei der Bevorratung zu Reparaturzwecken bedingt.

Weiterhin erfordert die integrierte Anordnung des Senders und Empfängers relativ strenge Zwangsbedingungen bei der möglichen Ausgestaltung der Peripheriemodule, beispielsweise hinsichtlich des einsetzbaren Gehäusematerials. Darüber hinaus müssen zu Reparaturzwecken gemeinsam mit einem eventuell defekten Peripheriemodul zugleich auch die Funkgeräte ausgetauscht werden, was anschließend relativ hohe Anforderungen an die Programmierung/Projektierung bei Rekonfiguration des Automatisierungssystems stellt. Zudem müssen zum Zwecke der Geräteidentifikation insbesondere zusätzliche Wechselmedien in Form von Adresssteckern oder dergleichen zum Einsatz kommen, was wiederum einen erhöhten Aufwand und entsprechende Kostennachteile bedeutet.

Der Erfindung liegt die Aufgabe zugrunde, ein Automatisierungsgerät und ein Automatisierungssystem der jeweils eingangs genannten Art unter Vermeidung der vorstehend aufgeführten Nachteile dahingehend weiterzuentwickeln, dass eine Flexibilität bei der Konfiguration und im Betrieb verbessert wird.

Die Aufgabe wird bei einem Automatisierungsgerät der eingangs genannten Art durch die kennzeichnenden Merkmale des Patentanspruchs 1 gelöst. Vorteilhafte weitere Ausgestaltungen des erfindungsgemäßen Automatisierungsgeräts sind Gegenstand von Unteransprüchen.

Weiterhin wird die Aufgabe gelöst durch ein erfindungsgemäßes externes Funkmodul gemäß Anspruch 8 für ein Automatisierungsgerät mit einer Anzahl von abgesetzten Peripherieeinheiten, wie I/O-Modulen oder dergleichen, von denen zumindest eine Peripherieeinheit drahtlos für einen Datenaustausch mit einem Schnittstellenmodul des Automatisierungsgeräts verbunden ist, wobei das externe Funkmodul eine Antenneneinheit, eine Sender-/Empfängereinheit, eine Speichereinheit sowie eine elektrische und mechanische Schnittstelle aufweist, die zum externen Verbinden mit der einen Peripherieeinheit und/oder dem Schnittstellenmodul des Automatisierungsgeräts ausgebildet ist.

Vorteilhafte weitere Ausgestaltungen des erfindungsgemäßen externen Funkmoduls sind Gegenstand von Unteransprüchen.

Darüber hinaus wird die Aufgabe bei einem Automatisierungssystem der eingangs genannten Art durch das kennzeichnende Merkmal des Patentanspruchs 11 gelöst.

Erfindungsgemäß ist ein Automatisierungsgerät mit einer Anzahl von abgesetzten Peripherieeinheiten, wie I/O-Modulen oder dergleichen, von denen zumindest eine Peripherieeinheit drahtlos für einen Datenaustausch mit einem Schnittstellenmodul des Automatisierungsgeräts verbunden ist, dadurch gekennzeichnet, dass zumindest die eine Peripherieeinheit für den Datenaustausch mit dem Schnittstellenmodul ein extern bezüglich der einen Peripherieeinheit angeordnetes erstes externes Funkmodul aufweist.

Des Weiteren weist erfindungsgemäß ein Automatisierungssystem ein Bussystem und eine Anzahl von an das Bussystem angeschlossenen Automatisierungsgeräten auf, wobei wenigstens ein Automatisierungsgerät eine Anzahl von abgesetzten Peripherieeinheiten besitzt, wie I/O-Modulen oder dergleichen, von denen zumindest eine Peripherieeinheit drahtlos für einen Datenaustausch mit einem Schnittstellenmodul des Automatisierungsgeräts verbunden ist, und ist dadurch gekennzeichnet, dass das wenigstens eine Automatisierungsgerät ein erfindungsgemäßes Automatisierungsgerät ist.

Nach einem Grundgedanken der vorliegenden. Erfindung ist also vorgesehen, dass zumindest eine abgesetzte Peripherieeinheit über ein extern bezüglich der Peripherieeinheit angeordnetes Funkmodul drahtlos mit einem Schnittstellenmodul kommuniziert. Durch das Vorsehen eines solchen externen Funkmoduls wird die Anzahl der erforderlichen Typen von Peripheriemodulen beziehungsweise Peripherieeinheiten (Gerätetypen) stark reduziert, da grundsätzlich jedes Peripheriemodul mit einem bestimmten, anwendungsspezifischen externen Funkmodul koppelbar ist. Hierdurch entsteht ein der drahtlosen Kommunikation fähiges Peripheriemodul, ohne dass dieses speziell in dieser Form hergestellt, vertrieben oder zu Reparaturzwecken bevorratet werden müsste. Darüber hinaus lockert die externe Anbringung des Funkmoduls die Zwangsbedingungen bei der baulichen Ausgestaltung der abgesetzten Peripherieeinheiten, insbesondere hinsichtlich eines eingesetzten Gehäusematerials dieser Peripherieeinheiten. Insbesondere ist somit auch die Verwendung von metallischem oder anderweitig elektrisch leitfähigem Material für die Gehäuse von Peripheriemodulen möglich, ohne dass es hierdurch zu einer Beeinträchtigung der drahtlosen Kommunikationsanbindung an das Schnittstellenmodul käme.

Um die vorstehend angesprochenen Vorteile möglichst umfassend nutzen zu können, sieht eine Weiterbildung des erfindungsgemäßen Automatisierungsgeräts vor, dass auch das Schnittstellenmodul ein extern bezüglich des Schnittstellenmoduls angeordnetes zweites externes Funkmodul für einen Datenaustausch mit der einen Peripherieeinheit aufweist.

Für eine hohe Flexibilität, insbesondere bei der Konfiguration beziehungsweise Rekonfiguration, ist in Weiterbildung des erfindungsgemäßen Automatisierungsgeräts vorgesehen, dass das erste externe Funkmodul über eine lösbare Verbindung, insbesondere eine Steckverbindung, mit der einen Peripherieeinheit verbunden ist und/oder dass das Schnittstellenmodul ein extern bezüglich des Schnittstellenmoduls angeordnetes zweites externes Funkmodul für einen Datenaustausch mit der einen Peripherieeinheit aufweist.

Um es einem Betreiber zu ermöglichen, jederzeit flexibel - gegebenenfalls auch nebeneinander - kabelgebundene sowie drahtlose Kommunikationsanbindungen vorzusehen, sieht eine äußerst bevorzugte Weiterbildung des erfindungsgemäßen Automatisierungsgeräts vor, dass zum Anbringen der ersten und/oder zweiten externen Funkmodule an der einen Peripherieeinheit beziehungsweise dem Schnittstellenmodul jeweils mindestens eine externe Schnittstelle an der einen Peripherieeinheit und/oder dem Schnittstellenmodul vorgesehen ist, wobei die Schnittstellen wahlweise zum Anschließen der ersten und/oder zweiten externen Funkmodule oder zum Anschließen einer Kabelverbindung zwischen der einen Peripherieeinheit und dem Schnittstellenmodul ausgebildet ist.

Insbesondere kann die Schnittstelle dabei in Form einer bekannten standardisierten Schnittstelle, wie einer IP67-Schnittstelle, einer M12-Schnittstelle oder einer USB-Schnittstelle, ausgebildet sein, um eine Integration vorhandener Hardware zu ermöglichen.

Bei Betrieb eines das erfindungsgemäße Automatisierungsgerät beinhaltenden Automatisierungssystems ist es erforderlich, dass zu Steuerungszwecken eine steuerungstechnisch eindeutige Adressierung von drahtlos angebundenen abgesetzten Peripherieeinheiten erfolgt. Hierzu kann erfindungsgemäß insbesondere vorgesehen sein, dass die eingesetzten externen Funkmodule eine Speichereinheit zum Abspeichern von Daten, wie Parametrierdaten und/oder Geräte-Identifikationsdaten aufweisen. In Weiterbildung des erfindungsgemäßen Automatisierungsgeräts ist in diesem Zusammenhang insbesondere vorgesehen, dass das Schnittstellenmodul zum Speichern von Daten, wie Parametrierdaten und/oder Geräte-Identifikationsdaten, auf dem ersten und/oder zweiten externen Funkmodul ausgebildet ist.

Auf diese Weise ergeben sich erfindungsgemäß grundsätzlich zwei Möglichkeiten für das programmtechnische Einsetzen des Automatisierungsgeräts beziehungsweise eines hierauf aufsetzenden Automatisierungssystems. Zum einen können die zum Betreiben eines drahtlos angebundenen Peripheriemoduls erforderlichen Parametrier- und/oder Geräteinformationsdaten durch das Schnittstellenmodul auf einem externen Funkmodul, das zum externen Anbringen an einer bestimmten abgesetzten Peripherieeinheit vorgesehen ist, abgespeichert werden, so dass die entsprechenden Daten anschließend direkt von dem betreffenden Funkmodul auf die betreffende abgesetzte Peripherieeinheit übertragbar sind. Dies vereinfacht insbesondere bei einem durch Reparatur bedingten Austausch von abgesetzten Peripherieeinheiten die anschließende Neuprogrammierung stark. Zum anderen kann ein dem Schnittstellenmodul zugeordnetes Funkmodul dazu benutzt werden, in seinem Sende- beziehungsweise Empfangsbereich befindliche weitere Funkmodule an abgesetzten Peripherieeinheiten ausfindig zu machen und zu identifizieren und anschließend bei bekannter Zuordnung der gefundenen Funkmodule zu bestimmten abgesetzten Peripherieeinheiten eine Programmierung direkt über die drahtlose Kommunikationsanbindung, das heißt über die Luftschnittstelle, durchzuführen.

Dementsprechend sieht eine vorteilhafte Weiterbildung des erfindungsgemäßen Automatisierungsgeräts vor, dass die eine abgesetzte Peripherieeinheit zum Lesen von Parametrierdaten und/oder Geräte-Identifikationsdaten von dem ersten und/oder zweiten Funkmodul ausgebildet ist.

Um auch bei Anwendung des erfindungsgemäßen externen Funkmoduls flexibel auf weitere anwendungsspezifische Erfordernisse reagieren zu können, ohne die Anzahl herzustellender und/oder zu bevorratender Funkmodul-Typen in die Höhe zu treiben, sieht eine Weiterbildung des erfindungsgemäßen externen Funkmoduls vor, dass die Antenneneinheit lösbar mit dem restlichen Funkmodul verbindbar ist. Somit lässt sich die Antenneneinheit je nach gewünschter Anwendung beispielsweise einmal als Kugelstrahler und ein anderes Mal als Antenneneinheit mit Richtwirkung ausbilden. Alternativ kann die Antenneneinheit jedoch auch in das externe Funkmodul integriert sein.

Der vorstehend für die drahtlose Anbindung von abgesetzten Peripherieeinheiten an ein Schnittstellenmodul in einem Automatisierungsgerät erläuterte grundlegende erfinderische Gedanke lässt sich auch in vorteilhafter Weise auf die Ebene des Bussystems, das heißt auf die Feldbusebene übertragen. Bei einer entsprechenden Weiterbildung des erfindungsgemäßen Automatisierungssystems ist daher vorgesehen, dass wenigstens ein Automatisierungsgerät über ein erfindungsgemäßes externes Funkmodul drahtlos für einen Datenaustausch mit dem Bussystem verbunden ist.

Weitere Eigenschaften und Vorteile der Erfindung ergeben sich aus der nachfolgenden Beschreibung von Ausführungsbeispielen anhand der Zeichnung. Es zeigen:
- Figur 1: ein schematisches Blockschaltbild einer ersten Ausgestaltung eines erfindungsgemäßen Automatisierungssystems;
- Figur 2: eine schematische Darstellung einer ersten Ausgestaltung eines externen Funkmoduls für ein Automatisierungsgerät sowie einer abgesetzten Peripherieeinheit des Automatisierungsgeräts;
- Figur 3: eine schematische Darstellung einer zweiten Ausgestaltung des erfindungsgemäßen externen Funkmoduls für ein Automatisierungsgerät; und
- Figur 4: eine weitere Ausgestaltung des erfindungsgemäßen Automatisierungssystems.

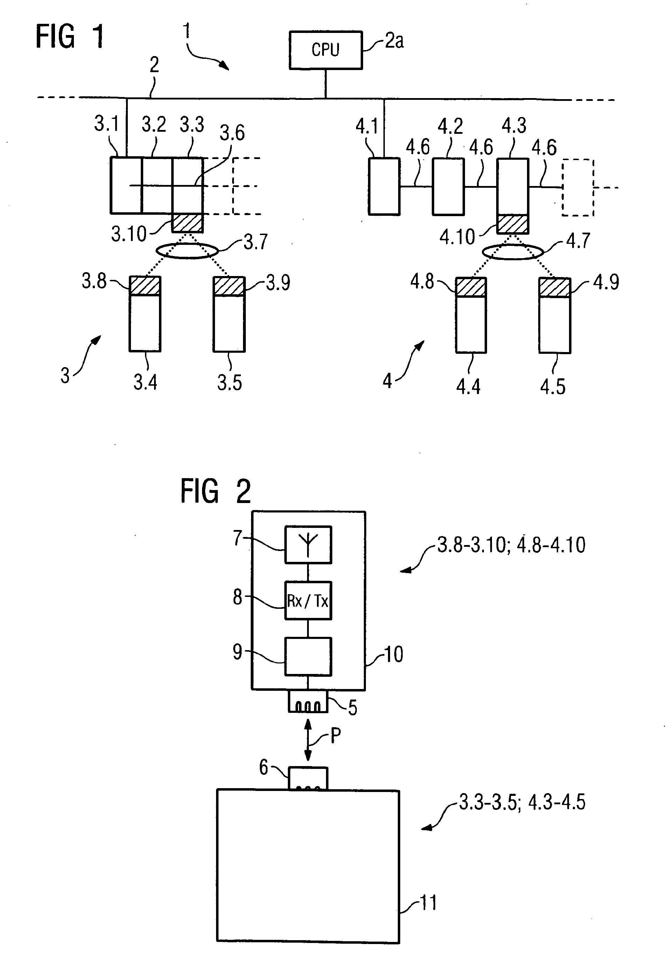

Figur 1 zeigt ein schematisches Blockschaltbild einer ersten Ausgestaltung eines erfindungsgemäßen Automatisierungssystems 1. Das Automatisierungssystem 1 weist ein Bussystem 2 und eine Anzahl von an das Bussystem 2 angeschlossenen Automatisierungsgeräten 3, 4 auf. Die Automatisierungsgeräte 3, 4 sind jeweils aus einer Anschaltbaugruppe 3.1., 4.1 und einer Anzahl von Peripheriemodulen oder Peripherieeinheiten 3.2-3.5, 4.2-4.5 gebildet. Die jeweilige Anzahl an Peripheriemodulen ist flexibel und anwendungsspezifisch erweiterbar, wie in Figur 1 mittels gestrichelter Linien angedeutet. Die Anschaltbaugruppen 3.1, 4.1 können das jeweilige Automatisierungsgerät 3, 4 an den Bus 2 anbinden und können beispielsweise eine CPU oder ein Interfacemodul aufweisen. Die Peripheriemodule 3.2-3.3 bzw. 4.2-4.3 sind untereinander und mit der Anschaltbaugruppe 3.1., 4.1. über einen Peripherie-/Kommunikationsbus 3.6 bzw. 4.6 verbunden, wobei es sich bei dem Peripherie-/Kommunikationsbus 3.6 um einen internen, selbstaufbauenden Peripherie-/Kommunikationsbus handelt, während der Bus 4.6 ein externer, mittels Kabelverschaltung hergestellter Peripherie-/Kommunikationsbus ist.

Die Peripheriemodule 3.4, 3.5 bzw. 4.4, 4.5 der Automatisierungsgeräte 3 beziehungsweise 4 stellen jeweils eine Gruppe abgesetzter Peripheriemodule des jeweiligen Automatisierungsgeräts 3, 4 dar und sind gemäß Figur 1 über unterlagerte, kabellose Kommunikationsanbindungen 3.7, 4.7 mit den weiteren Peripheriemodulen 3.2-3.3 bzw. 4.2-4.3 verbunden, wobei Peripheriemodul 3.3 bzw. 4.3 ein Gateway (oder eine Bridge) für die Anbindung der abgesetzten Peripheriemodule 3.4, 3.5 beziehungsweise 4.4, 4.5 an den jeweiligen Peripherie-/Kommunikationsbus 3.6 beziehungsweise 4.6 darstellt und dementsprechend erfindungsgemäß als Schnittstellenmodul fungiert. Im Folgenden werden die abgesetzten Peripherimodule 3.4, 3.5; 4.4, 4.5 lexikalisch abgrenzend auch als abgesetzte Peripherieeinheiten bezeichnet.

Bei den abgesetzten Peripherieeinheiten 3.4, 3.5; 4.4, 4.5 kann es sich erfindungsgemäß insbesondere um Actor-Sensor-Interface-Module (ASI-Module) oder Input/Output-Module (I/O-Module) handeln, über die beispielsweise digitale oder analoge Ein- und Ausgänge von Funktionseinheiten einer zu steuernden Maschine (nicht dargestellt) anschließbar und abfragbar sind, insbesondere zu Steuerungszwecken. Entsprechend ist das Gateway-Peripheriemodul 3.3, 4.3 vorzugsweise als ASI-Inter-facemodul ausgebildet. Die Automatisierungsgeräte 3, 4 müssen nicht, können aber selbst eine eigene "Intelligenz" besitzen. Insbesondere können sie in einzelnen Peripheriemodulen beziehungsweise -einheiten Prozessorkapazität für eine intelligente Datenvorverarbeitung vor einer Weitergabe auf den Bus 2 aufweisen. Die eigentlichen Steuerungsaufgaben kann eine übergeordnete Steuerungseinrichtung 2a wahrnehmen, bei dem vorliegenden Ausführungsbeispiel eine an den Bus 2 angeschlossene Prozessoreinheit (CPU).

Auf diese Weise ist eine modulare, dezentrale Peripherie geschaffen, die insbesondere mittels der abgesetzten Peripherieeinheiten 3.4, 3.5; 4.4, 4.5 ein tiefes, fein verteiltes Eindringen in die zu steuernde Maschine (nicht dargestellt) ermöglicht.

Für die bereits angesprochene drahtlose Kommunikation zwischen den abgesetzten Peripherieeinheiten 3.4, 3.5; 4.4, 4.5 mit dem entsprechenden Gateway-Peripheriemodul 3.3, 4.3 weist das erfindungsgemäße Automatisierungssystem 1 der Figur 1 an den vorstehend genannten Elementen jeweils externe Funkmodule 3.8-3.10 beziehungsweise 4.8-4.10 auf, die jeweils extern, das heißt von außen an dem jeweiligen Peripheriemodul angebracht sind, vorzugsweise über eine lösbare Steckverbindung. Dabei ist gemäß dem gezeigten Ausführungsbeispiel das externe Funkmodul 3.8 der abgesetzten Peripherieeinheit 3.4 zugeordnet, das externe Funkmodul 3.9 ist der abgesetzten Peripherieeinheit 3.5 zugeordnet, und das externe Funkmodul 3.10 ist dem Gateway-Peripheriemodul 3.3 zugeordnet. Entsprechend ist das externe Funkmodul 4.8 der abgesetzten Peripherieeinheit 4.4 zugeordnet, das externe Funkmodul 4.9 ist der abgesetzten Peripherieeinheit 4.5 zugeordnet, und das externe Funkmodul 4.10 ist dem Gateway-Peripheriemodul 4.3 zugeordnet.

Figur 2 zeigt anhand einer detaillierteren schematischen Darstellung eine erfindungsgemäße Ausgestaltung des externen Funkmoduls 3.8-3.10; 4.8-4.10. Das Funkmodul ist über eine elektrische und mechanische Schnittstelle 5 in Richtung des Doppelpfeils P lösbar mit der entsprechenden abgesetzten Peripherieeinheit beziehungsweise dem entsprechenden Peripheriemodul 3.3-3.5, 4.3-4.5 verbindbar, wobei die jeweilige Peripherieeinheit beziehungsweise das jeweilige Peripheriemodul eine entsprechende komplementäre elektrische und mechanische Schnittstelle 6 aufweist. Vorzugsweise ist insbesondere die komplementäre Schnittstelle 6 der jeweiligen Peripherieeinheit beziehungsweise des jeweiligen Peripheriemoduls 3.3-3.5; 4.3-4.5 dergestalt ausgebildet, dass alternativ zu der in Figur 1 gezeigten drahtlosen Kommunikationsanbindung der abgesetzten Peripherieeinheiten 3.4, 3.5 beziehungsweise 4.4, 4.5 auch eine herkömmliche kabelgebundene Kommunikationsanbindung realisierbar ist. Gemäß einer bevorzugten Ausgestaltung kann es sich bei der Schnittstelle 5, 6 um eine Standard-Schnittstelle handeln, beispielsweise eine IP67-, M12-, USB-Steckverbindung oder dergleichen.

Das externe Funkmodul 3.8-3.10; 4.8-4.10 gemäß Figur 2 weist weiterhin eine Antenneneinheit 7, eine Sender-/Empfängereinheit 8 sowie eine Speichereinheit 9 auf. Bei der Ausgestaltung gemäß Figur 2 ist die Antenneneinheit 7 zusammen mit der Sender-/Empfängereinheit 8 und der Speichereinheit 9 in ein gemeinsames Gehäuse 10 des externen Funkmoduls integriert, wobei an dem Gehäuse 10 auch die Schnittstelle 5 angeordnet ist. Die komplementäre Schnittstelle 6 der Peripherieeinheit beziehungsweise des Peripheriemoduls 3.3-3.5; 4.3-4.5 ist an einem Gehäuse 11 der jeweiligen Peripherieeinheit beziehungsweise des jeweiligen Peripheriemoduls angeordnet. Da erfindungsgemäß aufgrund der Verwendung eines externen Funkmoduls 3.8-3.10; 4.8-4.10 insbesondere die Antenneneinheit 7 außerhalb des Gehäuses 11 des Peripheriemoduls 3.3-3.5; 4.3-4.5 angeordnet ist, kann das Gehäuse 11 aus einem metallischen oder allgemein einem elektrisch leitfähigen Material gebildet sein, ohne dass hierdurch eine Abstrahlcharakteristik der Antenneneinheit und damit die Kommunikationsanbindung abgesetzter Peripheriemodule beeinträchtigt würde.

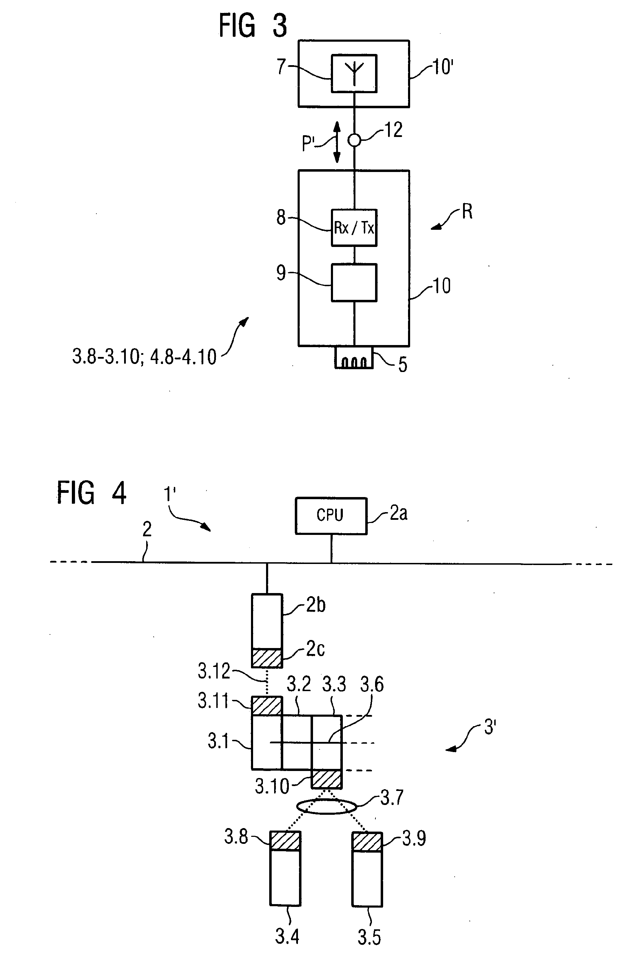

Figur 3 zeigt eine alternative Ausgestaltung des externen Funkmoduls 3.8-3.10; 4.8-4.10. Im Vergleich mit der Ausgestaltung gemäß Figur 2 tragen gleiche beziehungsweise funktionell ähnliche Elemente die gleichen Bezugszeichen. Anders als bei der Ausgestaltung gemäß Figur 2 ist bei dem externen Funkmodul gemäß Figur 3 die Antenneneinheit 7 als separate, extern an das Gehäuse 10 anschließbare Antenneneinheit 7 ausgebildet. Dazu ist um die Antenneneinheit 7 herum ein weiteres Gehäuse 10' vorgesehen, so dass das Gehäuse 10 lediglich noch die Sender-/Empfängereinheit 8 sowie die Speichereinheit 9 umfasst. Die Antenneneinheit 7 ist somit über eine nur schematisch dargestellte Schnittstelle 12, deren komplementäre Bestandteile an den Gehäuse 10, 10' vorgesehen sind, in Richtung des Doppelpfeils P' lösbar mit einem Rest R des externen Funkmoduls verbindbar. Auf diese Weise lassen sich flexibel bestimmte Abstrahlcharakteristiken für eine bestimmte Peripherieeinheit beziehungsweise ein bestimmtes Peripheriemodul bereitstellen, beispielsweise eine Kugelstrahler-Charakteristik oder eine stärker gerichtete Abstrahlcharakteristik.

Nachfolgend wird der Betrieb des anhand der Figuren 1 bis 3 exemplarisch dargestellten erfindungsgemäßen Automatisierungssystems näher erläutert:

Erfindungsgemäß erfolgt die Steuerung einer nicht näher dargestellten Maschine mittels eines in der CPU 2a ablaufenden Steuerprogramms. Zu diesem Zweck müssen die mit bestimmten Funktionseinheiten der Maschine in signaltechnischer Wirkverbindung stehenden Peripheriemodule beziehungsweise Peripherieeinheiten 3.1-3.5; 4.1-4.5 der Automatisierungsgeräte 3 beziehungsweise 4 signaltechnisch mit dem Bussystem 2 verbunden sein, an das auch die CPU 2a angeschlossen ist. Die genannten Peripheriemodule, insbesondere die abgesetzten Peripherieeinheiten 3.4, 3.5; 4.4, 4.5, sammeln und übertragen Daten von der beziehungsweise an die Funktionseinheiten der zu steuernden Maschine. Dabei erfolgt der Datenaustausch zwischen den Peripheriemodulen 3.1-3.3; 4.1-4.3 über den jeweiligen Peripherie-/Kommunikationsbus 3.6, 4.6 und von dort über die Anschaltebaugruppe 3.1, 4.1 zum Bussystem 2. Dagegen sind die abgesetzten Peripherieeinheiten 3.4, 3,5; 4.4, 4.5 über drahtlose Kommunikationsanbindungen 3.7, 4.7 mit dem jeweiligen Gateway-Peripheriemodul 3.3, 4.3 und über dieses - wie vorstehend erläutert - mit dem Bussystem 2 verbunden.

Hierbei tauschen die an den genannten Peripheriemodulen beziehungsweise -einheiten jeweils vorgesehenen externen Funkmodule 3.8-3.10; 4.8-4.10 mittels der Antenneneinheit 7 und der Sender/Empfängereinheit 8 Daten aus, die insbesondere in der Speichereinheit 9 abgelegt, beispielsweise zwischengespeichert sind beziehungsweise werden. Bei den in der Speichereinheit 9 abgelegten beziehungsweise zwischengespeicherten Daten kann es sich insbesondere (für die externen Funkmodule 3.8, 3.9; 4.8, 4.9) um von den abgesetzten Peripherieeinheiten 3.4, 3.5; 4.4, 4.5 gesammelte Betriebsdaten der zu steuernden Maschine oder (für die externen Funkmodule 3.10, 4.10) um von der CPU 2a übermittelte Steuerungsdaten handeln.

Aufgrund der beschriebenen externen Anordnung der Funkmodule 3.8-3.10; 4.8-4.10 bezüglich der jeweiligen Peripheriemodule beziehungsweise -einheiten 3.3-3.5; 4.3-4.5 ergibt sich zusätzlich zu der bereits erwähnten möglichen metallisch/elektrisch leitenden Ausbildung des Modulgehäuses 11 der weitere Vorteil, dass grundsätzlich für jede Art von Peripheriemodul beziehungsweise -einheit nur noch eine einzige Ausführungsform hergestellt, vertrieben und zu Reparaturzwecken bevorratet werden muss, da sich jedes Peripheriemodul unter Verwendung der Schnittstelle 6 in flexibler Weise drahtlos und/oder drahtgebunden auch innerhalb von bereits bestehenden Automatisierungssystemen einsetzen lässt. Dadurch wird die erforderliche Variantenvielfalt bei der Herstellung und Bevorratung stark reduziert, was entsprechende Vereinfachungen und Kostenreduzierungen mit sich bringt.

Nachfolgend wird ein weiterer entscheidender Vorteil der vorgestellten Kommunikationsanbindung unter Verwendung externer Funkmodule beschrieben:

Bei einer kabellosen Kommunikationsanbindung von Peripheriebaugruppen innerhalb eines Automatisierungsgeräts ist im Gegensatz zu einer kabelgebundenen Lösung, bei der eine direkte, eindeutige Zuordnung zwischen den verbundenen Baugruppen über die geschaffene körperliche Verbindung besteht, in jedem Fall eine zusätzliche Geräteidentifikation notwendig, da andernfalls bei identischen Gerätetypen, zum Beispiel 8-Kanal-I/O, eine Unterscheidbarkeit nicht mehr gegeben ist. Hierzu weist zunächst jedes externe Funkmodul 3.8-3.10; 4.8-4.10 eine eindeutige Kennzeichnung in Form einer so genannten MAC-Adresse auf, die in der jeweiligen Speichereinheit 9 des externen Funkmoduls dauerhaft abgelegt ist und über die das Funkmodul eindeutig identifiziert werden kann.

Allerdings ist innerhalb des Automatisierungssystems 1 von entscheidender Bedeutung zu wissen, mit welcher der abgesetzten Peripherieeinheiten 3.4, 3.5; 4.4, 4.5 das jeweilige Gateway-Peripheriemodul 3.3, 4.3 über das zugeordnete externe Funkmodul jeweils kommuniziert. Dazu wird zusätzlich zu der vorstehend erwähnten MAC-Adresse für jedes externe Funkmodul beziehungsweise die damit verbundene abgesetzte Peripherieeinheit eine systeminterne Kennung vergeben, die funktional beispielsweise einer aus Rechnernetzen bekannten IP-Adresse entspricht. Unter dieser systeminternen Kennung werden anschließend zu Steuerungszwecken die entsprechenden Peripheriemodule direkt angesprochen.

Die systeminterne Kennung ist erfindungsgemäß ebenfalls in der Speichereinheit 9 der externen Funkmodule 3.8-3.10; 4.8-4.10 abgelegt. Sie kann von dort aus über die Schnittstelle 5, 6 der betreffenden (abgesetzten) Peripherieeinheit 3.4, 3.5; 4.4, 4.5 mitgeteilt werden. Aufgrund dieser erfindungsgemäßen Ausgestaltung ergibt sich der weitere Vorteil, dass bei Austausch einer drahtlos angebundenen Peripherieeinheit 3.4, 3.5; 4.4, 4.5 die anschließend erforderliche Programmierung zur Integration in das Gesamt-Automatisierungssystem 1 direkt durch das wieder aufgesteckte externe Funkmodul 3.8, 3.9; 4.8, 4.9 erfolgen kann, ohne dass eine zeitaufwändigere und komplexere Programmierung durch die CPU 2a erforderlich wäre.

Auf diese Weise weiß das jeweilige Gateway-Peripheriemodul 3.3, 4.3, mit welcher der abgesetzter Peripherieeinheiten 3.4, 3.5; 4.4, 4.5 es drahtlos kommuniziert, so dass die genannten Peripheriemodule genau adressierbar sind.

Im Zuge des vorstehend erläuterten Programmierverfahrens unter Verwendung des externen Funkmoduls 3.8-3.10; 4.8-4.10 (Figur 2, 3) beziehungsweise der darin enthaltenen Speichereinheit 9 ist es einerseits möglich, das betreffende Funkmodul bei Inbetriebnahme des erfindungsgemäßen Automatisierungssystems 1 (Figur 1) zunächst auf ein als Schnittstellenmodul fungierendes Gateway-Peripheriemodul 3.3, 4.3 aufzustecken und somit ausgehend von der CPU 2a über das Bussystem 2 beziehungsweise den Peripherie-/Kommunikationsbus 3.6, 4.6 die erforderlichen Daten in der Speichereinheit 9 abzulegen.

Entsprechend ist im Rahmen des vorliegenden Ausführungsbeispiels vorgesehen, dass das Schnittstellenmodul 3.3, 4.3 zum Speichern von Daten, wie Parametrierdaten und/oder Geräte-Identifikationsdaten auf dem ersten und/oder zweiten externen Funkmodul 3.8-3.10, 4.8-4.10 ausgebildet ist. Anschließend wird dann das betreffende Funkmodul von dem Gateway-Peripheriemodul 3.3, 4.3 abgezogen und auf die jeweilige abgesetzte Peripherieeinheit 3.4, 3.5; 4.4, 4.5 aufgesetzt, welche dann mit Hilfe des Inhalts der Speichereinheit 9 über die Schnittstelle 5, 6 programmierbar/initialisierbar ist, wie weiter oben beschrieben. Entsprechend ist im Kontext des vorliegenden Ausführungsbeispiels vorgesehen, dass die abgesetzte Peripherieeinheit 3.4, 3.5, 4.4, 4.5 zum Lesen von Parametrierdaten und/oder Geräte-Identifikationsdaten von dem ersten und/oder zweiten externen Funkmodul 3.8-3.10, 4.8-4.10 ausgebildet ist.

Das erstmalige Beschreiben eines Funkmoduls beziehungsweise der Speichereinheit 9 mit Daten zu Identifikations- und Programmierzwecken wird in diesem Zusammenhang auch als "Taufe des Funkmoduls" bezeichnet. Ein "getauftes" Funkmodul kann anschließend mit einem Peripheriemodul betrieben werden, insbesondere in Form einer abgesetzten Peripherieeinheit, wie vorstehend beschrieben.

Als Alternative zu dem vorstehend beschriebenen Verfahren ist es im Rahmen des erfindungsgemäßen Automatisierungssystems 1 auch möglich, ein "ungetauftes" Funkmodul 3.8-3.10; 4.8-4.10 (Figur 2, 3) direkt auf eine (abgesetzte) Peripherieeinheit 3.4, 3.5; 4.4, 4.5 aufzusetzen. Sofern die Zuordnung zwischen MAC-Adresse des Funkmoduls und dem betreffenden Peripheriemodul bekannt ist, kann anschließend das Beschreiben der Speichereinheit 9 des Funkmoduls über ein weiteres Funkmodul an einem Gateway-Peripheriemodul 3.3, 4.3 auch über die Luftschnittstelle, das heißt die Kommunikationsanbindung 3.7, 4.7 erfolgen. Hierzu startet die CPU 2a über das jeweilige Gateway-Peripheriemodul 3.3, 4.3 beziehungsweise das zugehörige externe Funkmodul 3.10, 4.10 eine Abfrage aller weiteren vorhandenen Funkmodule 3.8, 3.9; 4.8, 4.9 in einem jeweiligen Sende- und Empfangsbereich des Funkmoduls 3.10, 4.10. Daraufhin teilen die Funkmodule 3.8, 3.9; 4.8, 4.9 an den abgesetzten Peripherieeinheiten 3.4, 3.5; 4.4, 4.5 ihre MAC-Adresse mit, woraufhin bei bekannter Zuordnung zwischen Funkmodulen und abgesetzten Peripherieeinheiten über ein identifiziertes Funkmodul auch ein direktes Ansprechen und Programmieren der betreffenden Peripherieeinheit möglich ist.

Bei den in der Speichereinheit 9 eines Funkmoduls gespeicherten Daten muss es sich - wie bereits erwähnt - nicht allein um Daten zur Geräteidentifikation handeln. Vielmehr können darüber hinaus in den Speichereinheiten 9 auch Parametrierdaten für den Betrieb eines jeweiligen Peripheriemoduls abgelegt sein, durch die ein Peripheriemodul veranlasst wird, im Betrieb bestimmte Aktionen durchzuführen. So kann beispielsweise durch in der Speichereinheit 9 des externen Funkmoduls 3.8 enthaltene Parametrierdaten die zugeordnete abgesetzte Peripherieeinheit 3.4 im Störungsfall veranlasst werden, bestimmte Diagnosedaten, wie eine Last-Spannungs-Diagnose, über die Funkmodule 3.8, 3.10 an die übergeordnete Steuerungseinrichtung (CPU 2a) zu senden.

Figur 4 zeigt anhand eines schematischen Blockschaltbildes eine weitere Ausgestaltung des erfindungsgemäßen Automatisierungssystems 1', wobei im Vergleich mit Figur 1 gleiche oder funktional ähnliche Elemente mit denselben Bezugszeichen versehen wurden. Lediglich aus Gründen der Übersichtlichkeit wurde in Figur 4 auf die Darstellung eines Automatisierungsgeräts mit externem Peripherie-/Kommunikationsbus verzichtet (vergleiche Automatisierungsgerät 4/Bus 4.6 in Figur 1).

Bei der Ausgestaltung gemäß Figur 4 wurde das anhand der Figur 1 ausführlich erläuterte Konzept der drahtlosen Kommunikationsanbindung von abgesetzten (Peripherie-)Einheiten auf die Busebene (Feldbusebene; Ebene des Bussystems 2) erweitert. Hierzu ist an das Bussystem 2 eine Anschaltebaugruppe 2b angeschlossen, die mit einem weiteren erfindungsgemäßen externen Funkmodul 2c (vergleiche Figur 2, 3) verbunden ist. Des Weiteren weist auch die bereits anhand von Figur 1 erläuterte Anschaltebaugruppe 3.1 des Automatisierungsgeräts 3' ein entsprechendes erfindungsgemäßes externes Funkmodul 3.11 auf, so dass zwischen den Funkmodulen 2c und 3.11 eine drahtlose Kommunikationsanbindung 3.12 zum Anbinden des Automatisierungsgeräts 3' an das Bussystem 2 realisiert ist.

Der Betrieb des erfindungsgemäßen Automatisierungssystems 1' gemäß Figur 4 erfolgt analog zu dem bereits detailliert beschriebenen Betrieb des erfindungsgemäßen Automatisierungssystems 1 gemäß Figur 1.

Selbstverständlich ist das vorstehend beschriebene Konzept der drahtlosen Anbindung des Automatisierungssystems 3' an das Bussystem 2 beziehungsweise die übergeordnete Steuerungseinrichtung (CPU 2a) mittels eines externen Funkmoduls auch auf das Automatisierungsgerät 4 gemäß Figur 1 übertragbar, was der Fachmann ohne weiteres erkennt.

Aus Gründen der Standardisierung sowie aus Kostengründen können die im Rahmen der Erfindung eingesetzten externen Funkmodule Standard-Funkübertragungselemente (Handelsware) enthalten, beispielsweise PC-Zubehör, wie USB-Bluetooth-Module, RS-232-Bluetooth-Module, B-WLAN-Module, USB-Zigbee-Module oder dergleichen, welche zur erfindungsgemäßen Anwendung entsprechend modifiziert werden müssen.

Ein wesentlicher Vorteil der vorliegenden Erfindung besteht darin, dass die Verwendung eines zusätzlichen externen, austauschbaren Speichermediums zum Programmieren/Initialisieren von abgesetzten Peripherieeinheiten entfällt, da diese Funktion durch das erfindungsgemäße externe Funkmodul beziehungsweise die darin enthaltene Speichereinheit übernommen wird. Damit ist insbesondere auch der Tausch einer defekten Peripherieeinheit - wie weiter oben bereits ausgeführt - ohne Zuhilfenahme eines zusätzlichen Programmiergeräts möglich.

Bei entsprechender Ausgestaltung der elektrischen und mechanischen Schnittstellen 5, 6 (Figur 2) kann der Anwender in vorteilhafter Weise zudem flexibel vor Ort entscheiden, ob er im Zuge einer anwendungsspezifischen Realisierung des Automatisierungssystems kabelgebunden oder kabellos arbeiten will, da es sich bei den eingesetzten Peripheriemodulen erfindungsgemäß in beiden Fällen um jeweils das gleiche Gerät handeln kann. Entsprechend muss der Anwender - wie erwähnt - jeweils nur einen Typ von Peripherieeinheit beziehungsweise -modul bestellen und bevorraten, was zu einer Reduzierung der Variantenvielfalt sowohl beim Gerätehersteller als auch beim Kunden beiträgt.

Den gleichen Zweck erfüllt auch die gemäß Figur 2 und 3 im Zuge der vorliegenden Erfindung vorgeschlagene flexible Anordnung der Antenneneinheit 7 des externen Funkmoduls, die ebenfalls erheblich zu einer Reduzierung der Variantenvielfalt beiträgt.

Bei einer entsprechenden Ausgestaltung der Schnittstelle 5, 6 gemäß Figur 2 sind die erfindungsgemäßen externen Funkmodule zudem standardisierbar, wobei sich keinerlei Geräteabhängigkeit der (abgesetzten) Peripherieeinheiten von der verwendeten Funktechnologie ergibt. Insbesondere sind die eingesetzten Geräte bei kabelgebundener und kabelloser Anbindung identisch ausgebildet.

## Patentansprüche

1. Automatisierungsgerät (3, 3', 4) mit einer Anzahl von abgesetzten Peripherieeinheiten (3.4, 3.5, 4.4, 4.5), wie I/O-Modulen oder dergleichen, von denen zumindest eine Peripherieeinheit drahtlos für einen Datenaustausch mit einem Schnittstellenmodul (3.3, 4.3) des Automatisierungsgeräts (3, 3', 4) verbunden ist, **dadurch gekennzeichnet, dass** zumindest die eine Peripherieeinheit (3.4, 3.5, 4.4, 4.5) für den Datenaustausch mit dem Schnittstellenmodul (3.3, 4.3) ein extern bezüglich der einen Peripherieeinheit angeordnetes erstes externes Funkmodul (3.8, 3.9, 4.8, 4.9) aufweist.

2. Automatisierungsgerät (3, 3', 4) nach Anspruch 1, **dadurch gekennzeichnet, dass** das erste externe Funkmodul (3.8, 3.9, 4.8, 4.9) über eine lösbare Verbindung (5, 6), insbesondere eine Steckverbindung, mit der einen Peripherieeinheit (3.4, 3.5, 4.4, 4.5) verbunden ist.

3. Automatisierungsgerät (3, 3', 4) nach Anspruch 1 oder 2, **dadurch gekennzeichnet, dass** das Schnittstellenmodul (3.3, 4.3) ein extern bezüglich des Schnittstellenmoduls (3.3, 4.3) angeordnetes zweites externes Funkmodul (3.10, 4.10) für einen Datenaustausch mit der einen Peripherieeinheit (3.4, 3.5, 4.4, 4.5) aufweist.

4. Automatisierungsgerät (3, 3', 4) nach Anspruch 3, **dadurch gekennzeichnet, dass** das zweite externe Funkmodul (3.10, 4.10) über eine lösbare Verbindung (5, 6), insbesondere eine Steckverbindung, mit dem Schnittstellenmodul (3.3, 4.3) verbunden ist.

5. Automatisierungsgerät (3, 3', 4) nach einem der Ansprüche 1 bis 4, **dadurch gekennzeichnet, dass** zum Anbringen der ersten und/oder zweiten externen Funkmodule (3.8-3.10, 4.8-4.10) an der einen Peripherieeinheit (3.4, 3.5, 4.4, 4.5) und/oder dem Schnittstellenmodul (3.3, 4.3) jeweils mindestens eine externe Schnittstelle (6) an der einen Peripherieeinheit und/oder dem Schnittstellenmodul (3.3, 4.3.) vorgesehen ist, wobei die mindestens eine externe Schnittstelle (6) wahlweise zum Anschließen der ersten und/oder zweiten externen Funkmodule (3.8-3.10, 4.8-4.10) oder zum Anschließen einer Kabelverbindung zwischen der einen Peripherieeinheit (3.4, 3.5, 4.4, 4.5) und dem Schnittstellenmodul (3.3, 4.3) ausgebildet ist.

6. Automatisierungsgerät (3, 3', 4) nach einem der Ansprüche 1 bis 5, **dadurch gekennzeichnet, dass** das Schnittstellenmodul (3.3, 4.3) zum Übertragen und Speichern von Daten, wie Parametrierdaten und/oder Geräteidentifikationsdaten, auf das erste und/oder zweite externe Funkmodul (3.8-3.10, 4.8-4.10) ausgebildet ist.

7. Automatisierungsgerät (3, 3', 4) nach einem der Ansprüche 1 bis 6, **dadurch gekennzeichnet, dass** die eine Peripherieeinheit (3.4, 3.5, 4.4, 4.5) zum Lesen von Parametrierdaten und/oder Geräte-Identifikationsdaten von dem ersten und/oder zweiten externen Funkmodul (3.8-3.10, 4.8-4.10) ausgebildet ist.

8. Externes Funkmodul (3.8-3.10, 3.11, 4.8-4.10, 2b) für ein Automatisierungsgerät (3, 3', 4) mit einer Anzahl von abgesetzten Peripherieeinheiten (3.4, 3.5, 4.4, 4.5), wie I/O-Modulen oder dergleichen, von denen zumindest eine Peripherieeinheit drahtlos für einen Datenaustausch mit einem Schnittstellenmodul (3.3, 4.3) des Automatisierungsgeräts (3, 3', 4) verbunden ist, insbesondere für ein Automatisierungsgerät nach einem der Ansprüche 1 bis 7, wobei das externe Funkmodul eine Antenneneinheit (7), eine Sender-/Empfängereinheit (8), eine elektrische und mechanische Schnittstelle (5) sowie vorzugsweise eine Speichereinheit (9) aufweist, die zum externen Verbinden mit der einen Peripherieeinheit (3.4, 3.5, 4.4, 4.5) und/oder dem Schnittstellenmodul (3.3, 4.3) des Automatisierungsgeräts (3, 3',4) ausgebildet ist.

9. Externes Funkmodul (3.8-3.10, 3.11, 4.8-4.10, 2b) nach Anspruch 8, **dadurch gekennzeichnet, dass** die Antenneneinheit (7) in das externe Funkmodul(3.8-3.10, 3.11, 4.8-4.10, 2b) integriert ist.

10. Externes Funkmodul (3.8-3.10, 3.11, 4.8-4.10, 2b) nach Anspruch 8, **dadurch gekennzeichnet, dass** die Antenneneinheit (7) lösbar mit dem restlichen Funkmodul (R) verbindbar ist.

11. Automatisierungssystem (1, 1'), mit einem Bussystem (2) und einer Anzahl von an das Bussystem (2) angeschlossenen Automatisierungsgeräten (3, 3', 4), wobei wenigstens ein Automatisierungsgerät eine Anzahl von abgesetzten Peripherieeinheiten (3.4, 3.5, 4.4, 4.5) besitzt, wie I/O-Modulen oder dergleichen, von denen zumindest eine Peripherieeinheit drahtlos für einen Datenaustausch mit einem Schnittstellenmodul (3.3, 4.3) des Automatisierungsgeräts (3, 3', 4) verbunden ist, **dadurch gekennzeichnet, dass** das wenigstens eine Automatisierungsgerät (3, 3', 4) weitere Merkmale der Ansprüche 1 bis 7 aufweist.

12. Automatisierungssystem (1, 1') nach Anspruch 11, **gekennzeichnet durch** erste und/oder zweite externe Funkmodule (3.8-3.10, 3.11, 4.8-4.10, 2b) nach einem der Ansprüche 8 bis 10.

13. Automatisierungssystem (1, 1') nach Anspruch 11 oder 12, **dadurch gekennzeichnet, dass** wenigstens ein Automatisierungsgerät (3') über ein externes Funkmodul (3.11, 2b), insbesondere nach Anspruch 8, drahtlos für einen Datenaustausch mit dem Bussystem (2) verbunden ist.
